# EUROPEAN PATENT SPECIFICATION

(11) **EP 2 134 435 B1**
(45) Date of publication and mention of the grant of the patent: **25.08.2010**
(21) Application number: 08737192.8
(22) Date of filing: 17.04.2008
(51) Int. Cl.: B01D 15/00, B01J 20/26

(54) **SOLID PHASE EXTRACTION OF OCHRATOXINS**
FESTPHASENEXTRAKTION VON OCHRATOXINEN
EXTRACTION EN PHASE SOLIDE D'OCHRATOXINES

(30) Priority: 17.04.2007 GB 0707375
(43) Date of publication of application: 23.12.2009
(73) Proprietor: Toximet Limited, Central Avenue Chatham Maritime Kent ME4 4TB (GB)
(72) Inventor: PILETSKY, Sergey, Cranfield Bedfordshire MK43 OEE (GB); PILETSKA, Olena, Cranfield Bedfordshire MK43 OEE (GB); COKER, Raymond, Bromley Kent BR1 2PJ (GB)
(74) Representative: Brookes Batchellor LLP
(86) International application number: PCT/GB2008/050267
(87) International publication number: WO 2008/125887

(56) References cited:
- WO-A-2006/120381
- TURNER N W ET AL: "Effect of the solvent on recognition properties of molecularly imprinted polymer specific for ochratoxin A" BIOSENSORS & BIOELECTRONICS, ELSEVIER SCIENCE PUBLISHERS, BARKING, GB, vol. 20, no. 6, 15 December 2004 (2004-12-15), pages 1060-1067, XP004648746 ISSN: 0956-5663
- JORN C. C. YU1, SVETLA KRUSHKOVA1, EDWARD P. C. LAI1 AND EWA DABEK-ZLOTORZYNSKA2: "Molecularly-imprinted polypyrrole-modified stainless steel frits for selective solid phase preconcentration of ochratoxin A" ANALYTICAL AND BIOANALYTICAL CHEMISTRY, vol. 382, no. 7, 11 June 2005 (2005-06-11), pages 1534-1540, XP002493699 Springer Berlin / Heidelberg

## Description

### Field of the Invention

The present invention relates to a copolymer suitable for binding of ochratoxin A. The copolymer may be used for solid phase extraction of ochratoxins and immobilisation of ochratoxins in solid phase extraction (SPE) cartridges for qualitative or quantitative analysis of ochratoxins in solutions extracted from foodstuffs.

### Background of the Invention

A wide variety of human foods and animal feeds, including edible nuts, oilseeds, cereal grains, and forages and products derived from them are susceptible to contamination by mycotoxins, which are toxic metabolic by-products of fungi which can occur on food and feed crops both before and after harvest.

Ochratoxin A is the most important and most commonly occurring of a structurally related group of ochratoxin compounds produced by some species of *Aspergillus,* such as *A. ochraceus,* mainly in tropical regions and by *Penicillium verrucosum,* a common storage fungus in temperate areas such as Canada, eastern and north western Europe and parts of South America. The EU has recently proposed statutory maximum limits for ochratoxin A of 5 µg/kg in raw cereal grains including rice and buckwheat, 3 µg/kg for derived cereal products or for cereal grains for direct human consumption, and 10 µg/kg in dried vine fruits. Accordingly direct determination of ochratoxin level is an important aspect of quality control in foods and feeds.

Measurements of mycotoxin content have conventionally been carried out by the use of high performance liquid chromatography (HPLC). However in those cases where HPLC equipment is not available or appropriate, determination by thin layer chromatography (TLC) is also possible. Commercial scanners are available for mycotoxin determination after TLC separation, using mercury lamps with an emission wavelength of 366 nm as a light source to stimulate fluorescence, which is detected and quantified by photo-multipliers. For quantitative testing there are also radioimmunoassay techniques and immunochemically-based techniques such as enzyme-linked immunosorbent assay (ELISA) methods.

Before a solution obtained by extraction from a foodstuff sample is subjected to quantitative measurement, using HPLC for example, the solution may be subjected to a 'clean-up' procedure using solid phase extraction to remove compounds that may interfere with the mycotoxin evaluation.

Qualitative detection of mycotoxins can be carried out using small chromatographic columns (so-called 'minicolumns') in which the mycotoxins are immobilised as a layer within a mineral adsorbent in the mini-columns. The minicolumns are viewed under ultraviolet light to cause the immobilised mycotoxin to fluoresce. Various minicolumn methods have been adopted as official tests of the AOAC International (Association of Official Analytical Communities)..

WO 2006/123189 describes apparatus for the quantitative fluorometric assay of mycotoxins immobilised in layers in minicolumns and also mentions use of non-molecularly imprinted (blank) polymers and molecularly imprinted polymers as adsorbents for mycotoxins in SPE cartridges.

WO 2003/101580 discloses a method of binding mycotoxins to a solid carrier which includes preparing a molecularly imprinted polymer (MIP) using the mycotoxin as template. From the extensive lists of mycotoxins and functional monomers that are mentioned, the only MIPs actually prepared use the mycotoxins deoxynivalenol (DON) and zearalenone (ZON) as templates. The MIP for DON is polymerised from diethylaminoethyl-methacrylate (DEAMA), 4-vinylpyridine (4-VP) or methacrylic acid (MAA) with ethylenediglycol-methacrylate (EDMA) or divinylbenzene (DVP) as cross-linker. The MIP for ZON is polymerised from trifluoromethacrylic acid (TFM) or 4-VP using EDMA as cross-linker.

WO 2006/120381 discloses a sensor comprising a molecularly imprinted polymer for binding the anaesthetic propofol. The polymer is composed of a monomer selected from one or more of N,N-diethylamino ethyl methacrylate (DEAEM), acrylamide, 2-(trifluoromethyl)acrylic acid (TFMAA), itaconic acid and ethylene glycol methacrylate phosphate (EGMP), and a cross-linker. During polymerisation propofol is used as a template to achieve the desired molecular imprinting.

An object of the present invention is to provide a polymer that can be used as an SPE adsorbent that is selective for ochratoxins.

### Summary of the nvention

The present invention is based on the finding that a copolymer of diethyl amino ethyl methacrylate and itaconic acid, prepared without molecular imprinting are able to immobilise ochratoxin A when used as an SPE adsorbent.

Accordingly, in one aspect the present invention provides a copolymer of diethyl amino ethyl methacrylate and itaconic acid, prepared without molecular imprinting for use as an SPE adsorbent to immobilise ochratoxin A.

Where such polymers are novel per se they also form another aspect of the present invention.

The polymers used in the invention may be prepared by conventional polymerisation techniques without use of ochratoxins, or structural analogues, as templates. Preferably the polymers are prepared in macroporous form, for example by use of a porogen during polymerisation.

A further aspect of the present invention is an SPE adsorbent unit comprising a column, cuvette, rod, needle, membrane or flat surface loaded or coated with an adsorbent layer of a polymer containing amido or amino-alkyl and acidic moieties.

Another aspect of the present invention is the use of a copolymer of diethyl amino ethyl methacrylate and itaconic acid, prepared without molecular imprinting as an adsorbent for ochratoxins.

A further aspect of the present invention is a fluorometric analysis for ochratoxins which comprises adsorbing the ochratoxins on a polymer containing amido or amino-alkyl and acidic moieties loaded in or on a cuvette, cartridge, rod or flat surface, exposing the immobilised ochratoxins to UV light and detecting the fluorescence emitted by the immobilised ochratoxins.

Monomers which can be used for copolymer preparation to provide appropriate moieties in the polymer include diethyl aminoethyl methacrylate (DEAEM) and an acidic monomer selected from itaconic acid (IA).

Preferably the copolymer is cross-linked with an effective crosslinking agent that does not interfere with the interaction with ochratoxin. Suitable cross-linkers include polyol diacrylates, such as ethylene glycol dimethacrylate (EGDMA), bis-acrylamides such as N'N'-methylene bisacrylamide and divinyl compounds, such as divinyl benzene (DVB), and their analogues.

Advantageously the polymer or copolymer is porous to increase the surface area available for interaction with the ochratoxins.

### Brief Description of the Drawings

Figure 1 is a cross-sectional view of an SPE adsorbent cartridge in accordance with the invention,
Figure 2 is a cross-sectional view of an alternative configuration of the SPE adsorbent cartridge of Figure 1.

### Detailed Description of the Invention

A polymer comprising units containing aminoalkyl and acidic moieties as primary component of the present invention may be prepared by copolymerising appropriate monomers containing respectively aminoalkyl and acidic moieties (the functional monomers), preferably in the presence of a crosslinking agent.

The polymer is preferably made porous to increase the surface area available for interaction with ochratoxins. The porous polymer may be prepared by polymerising a functional monomer and a cross-linker in the present of a porogen i.e. a material that is dispersible in the monomers, and remains dispersed in the polymers after reaction of the monomers, but can be removed after the polymer is formed to form pores within the polymer. Typically an increase in porosity leads to increase in surface area which could be used for maximising binding capacity.

Typically a suitable porogen is inert in the polymerisation reaction. Porogens may be solids, liquids or gases. Solids or liquids can be removed by decomposition or by dissolving out with a suitable solvent. Typically a liquid porogen is used that can be finely dispersed in the polymerisation mixture by stirring, and can be removed by washing the polymer with a suitable solvent.

The polymer may also be prepared as gel, which is beneficial for creating optically transparent articles.

When the functional monomers are cross-linked with the favoured cross-linkers ethylene glycol dimethacrylate (EGDMA), N'N'-methylene bisacrylamide and divinyl benzene (DVB), then a suitable porogen is N,N-dimethylformamide (DMF). Acetonitrile, methanol, toluene, ethanol, glycerol or other solvents used in practice for radical polymerisation may also be used.

The reaction of the functional monomer with the selected cross-linking agent is carried out under conventional conditions suitable for the reactants. For example reaction of the listed functional monomers with the cross-linker ethylene glycol dimethacrylate and divinyl benzene may be carried out under elevated temperatures (i.e. above ambient) or under UV-irradiation in the presence of a suitable initiator, such as 1,1-azobis(cyclohexanecarbonitrile). The UV polymerization may be performed at low temperature (i.e. below ambient) to result in formation of optically transparent gel-like polymers. Precipitation polymerisation is also feasible. Many different initiators of radical, atom transfer, ionic polymerizations may also be used as well for developing suitable polymers.

The monomers may also be used for formation of graft polymers on the surface of beads, membranes, surfaces or other articles using chemical, UV or plasma processes known by practitioners in this field.

In the SPE polymer the proportion of units derived from the functional monomer to the units derived from the cross-linker may vary from about 5:1 to about 1:100. Ratios within the range of about 1:3 to 1:20 has been found to be especially effective. For example, a ratio of 1:4 provides an effective absorbent in a polymer produced by thermal polymerisation, and in a polymer produced by UV-polymersiation at low temperature.

While EGDMA, N'N'-methylene bisacrylamide and divinyl benzene (DVB) are the favoured cross-linkers, other monomers capable of crosslinking the functional monomers may be used. The cross-linker should preferably be of similar reactivity to the functional monomer. Suitable cross-linkers include, but are not limited to, ethylene glycol dimethacrylate (EGDMA), glycerol dimethacrylate (GDMA), N'N'-methylene bisacrylamide trimethylacrylate (TRIM), divinylbenzene (DVB) and trimethylolpropane trimethacrylate. Practitioners in this field will be able to select additional monomers and cross-linkers suitable for a particular system.

For analytical use in the immobilisation of ochratoxins, the finished polymer may be loaded into, or coated on or integrated with a suitable column, cuvette, needle, membrane, rod or flat surface for use as an SPE adsorbent unit. The support for the SPE adsorbent is preferably selected from a material that does not fluoresce in a way that will interfere with detection of fluorescence from the adsorbed aflatoxin, or which fluoresces at a manageable background level. The polymer is preferably loaded as a powder or monolith material which rests in a layer against a preformed frit as found in commercially available empty SPE cartridges, or as a uniform layer applied to a rod, cuvette, needle, membrane or flat surface.

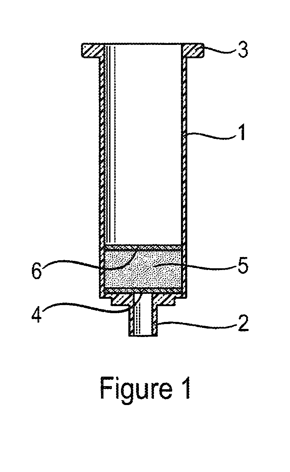

A typical unit is shown in Figure 1 of the accompanying drawings. An empty cylindrical SPE cartridge 1 (commercially available from, for example, Supelco of Poole, UK) has an outlet spout 2 and support flanges 3 at its inlet. The cartridge is made from plastics material that suitably has low fluorescence and that is ideally non-fluorescent under the conditions which stimulate fluorescence of ochratoxins. A porous frit 4, preferably of non-fluorescent material such as PTFE, is placed across the aperture giving access to the outlet spout 2. Adsorbent polymer in powder form is loaded into the cartridge to form a polymer layer 5. A further retaining frit 6 may be placed against the upper surface of the polymer layer 5. Alternatively a suitably shaped monolith of porous polymer is placed on top of the frit 4.

In use of the SPE unit, a liquid extract from a material potentially containing an aflatoxin is poured into the cartridge and allowed to drain (naturally or under suction) through the absorbent layer 5, passing out of the cartridge through the outlet spout 3. Any aflatoxin in the sample is absorbed by the polymer and forms a layer or band in the upper region of the polymer, below the frit 6, if present.

The thus formed SPE adsorbent units may be used for quantitative analysis of ochratoxins by inserting the unit into an analytical fluorimeter, for example, as described in WO 2006/123189, the entire disclosure of which is incorporated herein by reference.

To reduce background fluorescence during the analysis, it is useful to provide an opaque area or strip on the surface of the cartridge, to cover the polymer just below the region where the fluorescent band of adsorbed aflatoxin will appear. The effect may be supplemented by a further opaque area or strip on the cartridge just above the frit 6 or the region where the fluorescent band will appear.

The opaque areas may be formed by applying adhesive tape, such as masking tape or electric insulation tape, preferably black tape, to a cartridge after loading the polymer. Alternatively, the tape can be applied before loading the polymer, if the upper level of the polymer can be accurately predicted.

In a commercial process where the polymer is loaded in accurately controlled conditions, a cartridge may be used that has opaque areas formed during manufacture, for example, by coating or spraying with an opaquing material.

This technique for reducing background fluorescence is applicable to other SPE cartridges, or the previously mentioned mini-columns with mineral adsorbents, where a fluorescable band of adsorbed compounds is created in an absorbent material. Accordingly, this forms a further aspect of the invention independent of the above-described use with the polymer absorbents of this invention.

The SPE adsorbent units may also be used for the clean-up of samples prior to quantitative analysis by HPLC or ELISA.

The polymers may optionally be treated with a mineral oil to improve the binding and the fluorescent output of an ochratoxin band immobilised on the polymer (see Piletska E. V., Romero-Guerra M., Guerreiro A. R., Karim K., Turner A. P. F., Piletsky S. A. (2005) Adaptation of the molecular imprinted polymers towards polar environment. Anal. Chim. Acta, 542, 47-51.)

An SPE adsorbent made from a porous copolymer of diethyl aminoethyl methacrylate (DEAEM) and itaconic acid (IA) with the favoured cross-linker ethylene glycol dimethacrylate or divinyl benzene has been found to be especially effective to immobilise ochratoxin A.

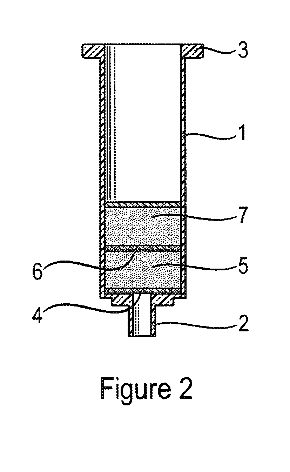

In another embodiment of the invention, shown in Figure 2, a further polymer layer 7 may be added to the cartridge on the frit 6 above the SPE adsorbent. This can be used to provide additional clean-up of sample solutions delivered to the cartridge, when required.

A suitable additional clean-up layer for ochratoxins is provided by a diethyl aminoethyl-methacrylate (DEAEM)-based polymer, which has been found to successfully remove potentially interfering compounds from samples taken from groundnuts (peanuts). Other suitable clean-up materials and procedures will be well known to those familiar with analysis for the presence of ochratoxins. Care must be taken to avoid diminishing the amount of ochratoxins in a sample during clean-up.

As well as the use for quantitative analysis described above the SPE polymer of this invention may find use as sheets or membranes to bind ochratoxins, or in sensors as disclosed in WO 2006/120381.

The polymer may be used as a clean-up step for samples which will be subjected to quantitative measurement in methods other than fluorometric analysis, such as chromatography. A liquid sample extract from a food product potentially containing ochratoxins is contacted with the polymer to adsorb any ochratoxins that are present, while other materials present in the sample are removed from the polymer by washing with a suitable solvent. Then the ochratoxins are eluted from the polymer and used as a clean solution for quantitative measurement of any ochratoxins present, for example by HPLC.

The implementation of the present invention will be further understood from the following Examples. (The intensity of the background fluorescence of the described polymers, and the fluorescent intensity of the immobilized aflatoxin, were determined by utilising a sensor device as disclosed in WO 2006/120381.)

### Example 1 - Preparation of Polymer

A polymerisation mixture was prepared by stirring the functional monomer diethyl aminoethyl-methacrylate (DEAEM), 5g; a cross-linker ethylene glycol dimethacrylate (EGDMA), 20g; a porogen N,N-dimethylformamide (DMF), 25g; and an initiator 1,1-azobis(cyclohexanecarbonitrile), 500mg. The polymerisation mixture was illuminated for 20 min using a Hönle 100UV lamp (intensity 0.157 W/cm²) (Hönle UV, UK) followed by thermo-annealing in an oil bath at 80 °C for 12 hours. Washing with methanol removed the solvent (DMF). The resulting polymer is a macroporous material. The resultant bulk polymers were ground and wet-sieved in methanol. The fraction with particle size in the range from 25 to 106 µm was collected and dried.

After preparation, 75mg of polymer were added to empty 1 ml non-fluorescent plastic cartridges (Phenomenex; Macclesfield, UK) between two non-fluorescent Teflon (PTFE) frits. These filled cartridges were used for screening for adsorption of ochratoxin A.

### Example 2 - Testing of DEAEM-based polymer on binding of OTA

DEAEM cartridges prepared as in Example 1 were pre-conditioned with 2 ml of HPLC grade water, then loaded with 4 ml of 60% acetonitrile (60:40, acetonitrile/water) solution spiked with 50 ng of OTA. Further DEAEM cartridges prepared as in Example 1 were pre-conditioned with 2 ml of HPLC grade water, then loaded with 4 ml of 15 % acetonitrile (15:85, acetonitrile/water) solution spiked with 50 ng of OTA.

In both cases testing for fluorescence with apparatus as disclosed in WO 2006/123189 showed very limited binding of OTA.

### Example 3 - Testing of itaconic acid-based polymer on binding of OTA

An itaconic acid-based polymer was prepared, and loaded into SPE cartridges, using the procedures of Example 1. Loaded cartridges were washed with 2 ml of water and loaded with 4 ml of 60% acetonitrile spiked with 50 ng of OTA.

It was found that the itaconic acid polymer does not show any adsorption of OTA from 60% acetonitrile solution, possible because OTA fluorescence is quenched due to interaction with acidic groups. Adsorption of OTA from 15% acetonitrile was also tested with no significant change.

### Example 4 - Testing of TFMAA-based polymer on binding of OTA

A TFMAA-based polymer was prepared, and loaded into SPE cartridges, using the procedures of Example 1. Loaded cartridges were washed with 2 ml of water and loaded with 4 ml of 60% acetonitrile spiked with 50 ng of OTA.

TFMAA- based polymer showed binding of OTA close to the top of the SPE column but again its fluorescence was quenched, possibly by interactions with acidic groups of the polymer. Adsorption of OTA from 15% acetonitrile showed no significant change.

### Example 5 - Testing of AMPSA-based polymer on binding of OTA

An AMPSA-based polymer was prepared, and loaded into SPE cartridges, using the procedures of Example 1. Loaded cartridges were washed with 2 ml of water and loaded with 4 ml of 60% acetonitrile spiked with 50 ng of OTA.

Measurement confirmed that AMPSA-based polymer adsorbed the OTA from extraction solution. The position of the peak was close to the upper frit of the cartridge.

### Example 6- Testing of itaconic acid/DEAEM- based polymer (IA/DE)

### on binding of OTA

An itaconic acid/DEAEM-based polymer (IA/DE) was made using following composition:

| | |
|---|---|
| 1 g | of itaconic acid |
| 1g | of DEAEM |
| 8 g | of EGDMA |
| 10 g | of DMF |
| 100 mg | of initiator |

The polymer mixture was degassed under nitrogen flow for 10 min and polymerised using the conditions of Example 1. The obtained polymer was washed with methanol, ground, and sieved, and the fraction between 25 and 106 µm was collected and dried. Cartridges were packed with 75 mg of the polymer as in Example 1.

After pre-conditioning with 2 ml of HPLC water, cartridges were loaded witi 4 ml of 15 % acetonitrile containing variously 1-300 ng of OTA. It was found that it was possible to detect from 5 ng to 300 ng of OTA adsorbed from 15% acetonitrile by IA-DE-based polymer.

The position of the band was closer to the lower frit than in Example 5, but the adsorption was strong, which allowed washing the cartridge with 1 ml of 15% acetonitrile without removing the OTA.

### Example 7- Mineral oil treatment

IA/DE -based polymer cartridges were prepared as in Example 6. The polymer was treated with mineral oil by the following treatment:
- 1 ml of acetonitrile
- 1 ml of chloroform
- 2 ml of chloroform containing 1 % of mineral oil
- 1 ml of chloroform
- 1 ml of acetonitrile
- 2 ml of water

Experiment on adsorption of different quantities of OTA was conducted and it was found that band of OTA stayed higher on the top of the polymer, but the difference in sensitivity of detection was not very pronounced.

### Example 8 - Detection of OTA in maize and peanut matrices

Itaconic acid- DEAEM-based polymers were tested with maize and peanut matrices spiked with OTA. It was found that OTA is adsorbed lower on polymer layer than other fluorescent compounds found in maize and peanut extracts. This could be advantageous because it allowed quantifying the OTA independently of presence of matrix.

### Example 9 - Combination SPE cartridge for OTA:

To a cartridge prepared as in Example 6, was added an upper polymer layer of 75 mg of diethyl aminoethyl-methacrylate (DEAEM)-based polymer to provide a clean-up layer to immobilise any interfering compounds while allowing the OTA to pass through to the IA/DE-based polymer layer. The DEAEM-based polymer layer is effective to remove a significant proportion of the interfering components present in groundnuts (peanuts).

Tests were carried out using 10 ng of OTA loaded in peanut matrix in 60% acetonitrile diluted 4 times with water ie 15% acetonitrile, and the same matrix solution without OTA. Both cartridges were washed with 15 % acetonitrile after loading. The combination of layers of the two polymers showed improved removal of interference from the matrix.

### Example 10 - UV polymerisation on ice

Polymerisation of a mixture of 1g itaconic acid, 1g DEAEM, 8g EGDMA, 10g DMF, 100 mg of 1,1-azobis (cyclohexanecarbonitrile) was performed using weak UV lamp (light intensity 0.015 kW) with the polymerisation solution kept at 4 °C (on ice). The polymerisation was conducted for 4 hours.

The DMF was removed from the polymer by Soxhlet extraction with methanol (using approximately 100 cycles); and the polymer was then completely dried under vacuum. The resultant polymer was ground using an Ultracentrifuge Mill (Retsch, UK) in order to get more regular uniform-sized particles. A fraction with particle-size 63 - 125 µm was collected and analysed in relation to background fluorescence and ability to bind ochratoxin A.

It was found that the polymer obtained by UV-polymerisation in this Example had a background fluorescence significantly lower than that of a similar polymer obtained by thermo-polymerisation as in Example 6.

Additionally the different morphology of the UV-polymer provided higher affinity towards ochratoxin A, resulting in a sharper peak in a higher position on the top of the polymer layer relative to the thermo-polymer.

## Claims

1. Use of a copolymer of diethyl aminoethyl methacrylate and itaconic acid, prepared without molecular imprinting, as an SPE adsorbent to immobilise ochratoxin A.

2. Use according to claim 1 in which the copolymer has been cross-linked with a cross-linking monomer.

3. Use according to claim 2 in which the cross-linker is ethylene glycol dimethacrylate N'N'-methylene bisacrylamide or divinyl benzene.

4. Use according to any one of claims 1 to 3 in which the copolymer has been obtained by UV-polymerisation at a temperature below ambient.

5. Use according to any one of claims 1 to 4 in which the copolymer has been rendered macroporous by removal of a porogen present during polymerisation.

6. Use according to any one of claims 1 to 5 in which the copolymer and ochratoxin A absorbed thereon is used as a sample in a fluorometric analysis method.

7. Use according to any one of claims 1 to 5 in which the absorbed ochratoxin A is eluted from the copolymer and used as a sample in quantitative measurement method.

8. A macroporous copolymer obtainable by polymerisation of diethyl aminoethyl methacrylate and itaconic add with cross-linking by ethylene glycol dimethacrylate N'N'-methylene bisacrylamide or divinyl benzene, or a mixture thereof, without molecular imprinting and in the presence of a porogen solvent, followed by washing to remove the porogen.

9. An SPE adsorbent unit comprising a cuvette, cartridge, needle, membrane, rod or flat surface loaded or coated with an adsorbent layer of a copolymer as claimed in claim 8.

10. A fluorometric analysis method for ochratoxin A which comprises adsorbing ochratoxin A on a copolymer as claimed in claim 8 loaded in or coated or grafted on a cuvette, cartridge, needle, membrane, rod or flat surface, exposing the immobilised ochratoxins to UV light and detecting the fluorescence emitted by the immobilised ochratoxin A.

11. A clean-up method prior to quantitative measurement of ochratoxins, in which a sample liquid is contacted with a copolymer as claimed in claim 8 loaded in or coated or grafted on a cuvette, cartridge, rod, needle, membrane or flat surface to adsorb any ochratoxins that are present, and the ochratoxins are eluted from the polymer for quantitative measurement of any ochratoxins present.

## Patentansprüche

1. Verwendung eines Copolymers aus Diethylaminoethylmetacrylat und Itakonsäure, dargestellt ohne molekulares Prägen, als ein SPE-Adsorbens zur Immobilisierung von Ochratoxin A.

2. Verwendung nach Anspruch 1, bei der das Copolymer mit einem vernetzenden Monomer vernetzt wurde.

3. Verwendung nach Anspruch 2, bei der der Vernetzer Ethylenglycoldimethacrylat-N'N'-Methylenbisacrylamid oder Divinylbenzen ist.

4. Verwendung nach einem der Ansprüche 1 bis 3, bei der das Copolymer durch eine UV-Polymerisation bei einer Temperatur unterhalb der Umgebungstemperatur erhalten worden ist.

5. Verwendung nach einem der Anspruch 1 bis 4, bei der das Copolymer durch das Entfernen eines während der Polymerisation vorhandenen Porogens makroporös geworden ist.

6. Verwendung nach einem der Ansprüche 1 bis 5, bei der das Copolymer und das daran absorbierte Ochratoxin A als eine Probe bei einem fluorometrischen Analyseverfahren verwendet wird.

7. Verwendung nach einem der Ansprüche 1 bis 5, bei dem das absorbierte Ochratoxin A von dem Copolymer eluiert und als eine Probe bei einem quantitativen Messverfahren verwendet wird.

8. Makroporöses Copolymer, erhältlich durch Polymerisation von Diethylaminoethylmetacrylat und Itakonsäure mittels Vernetzung durch Ethylenglycoldimethacrylat-N'N'-Methylenbisacrylamid oder Divinylbenzen, oder eine Mischung daraus, ohne molekulares Prägen und bei dem Vorhandensein eines Porogen-Lösungsmittels; gefolgt von einem Waschen zum Entfernen des Porogens.

9. SPE-Absorbenseinheit, umfassend eine Küvette, eine Kartusche, eine Nadel, eine Membran, einen Stab oder eine flache Oberfläche, mit einer Absorbensschicht eines Copolymers, wie in Anspruch 8 beansprucht, beladen oder beschichtet.

10. Fluorometrisches Analyseverfahren für Ochratoxin A, das umfasst Adsorbieren von Ochratoxin A an einem Copolymer wie in Anspruch 8 beansprucht, wobei eine Küvette, eine Kartusche, eine Nadel, eine Membran, ein Stab oder eine flache Oberfläche damit beladen, beschichtet oder aufpolymerisiert ist, Aussetzen des unbeweglichen Ochratoxins einem UV-Licht und Detektieren der von dem immobilisierten Ochratoxin A emittierten Fluoreszenz.

11. Reinigungsverfahren vor einer qualitativen Messung von Ochratoxinen, bei dem eine Probenflüssigkeit mit einem Copolymer, wie in Anspruch 8 beansprucht, in Kontakt gebracht wird, wobei eine Küvette, eine Kartusche, ein Stab, eine Nadel, eine Membran oder eine flache Oberfläche damit beladen, beschichtet oder aufpolymerisiert ist, um alle Ochratoxine, die vorhanden sind, zu adsorbieren, und die Ochratoxine von dem Polymer für eine quantitative Messung aller vorhandenen Ochratoxine eluiert werden.

## Revendications

1. Utilisation d'un copolymère de méthacrylate de diéthylaminoéthyle et d'acide itaconique, préparé sans mise d'une empreinte moléculaire, comme adsorbant d'extraction en phase solide pour immobiliser l'ochratoxine A.

2. Utilisation suivant la revendication 1, dans laquelle le copolymère a été réticulé par un monomère de réticulation.

3. Utilisation suivant la revendication 2, dans laquelle l'agent de réticulation est le diméthacrylate d'éthylène glycol, le N'N'-méthylène bisacrylamide ou le divinylbenzène.

4. Utilisation suivant l'une quelconque des revendications 1 à 3, dans laquelle le copolymère a été obtenu par polymérisation par UV à une température inférieure à la température ambiante.

5. Utilisation suivant l'une quelconque des revendications 1 à 4, dans laquelle le copolymère a été rendu macroporeux par élimination d'un agent porogène pendant la polymérisation.

6. Utilisation suivant l'une quelconque des revendications 1 à 5, dans laquelle le copolymére et l'ochratoxine A, qui y est absorbée, est utilisé comme échantillon dans un procédé d'analyse fluorométrique.

7. Utilisation suivant l'une quelconque des revendications 1 à 5, dans laquelle l'ochratoxine A absorbée est éluée du copolymère et est utilisée comme échantillon dans une procédure de mesure quantitative.

8. Copolymère macroporeux pouvant être obtenu par polymérisation du méthacrylate de diéthylaminoéthyle et de l'acide itaconique avec réticulation par du diméthacrylate d'éthylène glycol, du N'N'-méthylène bisacrylamide ou du divinylbenzène ou l'un de leurs mélanges, sans mise d'une empreinte moléculaire et en la présence d'un solvant porogène, suivie d'un lavage pour éliminer l'agent porogène.

9. Unité d'adsorbant pour l'extraction en phase solide, comprenant une cuvette, une cartouche, une aiguille, une membrane, une tige ou une surface plate chargée ou revêtue d'une couche d'adsorbant d'un copolymère, tel que revendiqué à la revendication 8.

10. Procédé d'analyse fluorométrique de l'ochratoxine A, dans lequel on adsorbe de l'ochratoxine A sur un copolymère, tel que revendiqué à la revendication 8, chargé dans ou en revêtement ou greffé sur une cuvette, une cartouche, une aiguille, une membrane, une tige ou une surface plate, on expose les ochratoxines immobilisées à de la lumière UV et on détecte la fluorescence émise par l'ochratoxine A immobilisée.

11. Procédé de purification avant une mesure quantitative d'ochratoxines, dans lequel on met un liquide servant d'échantillon en contact avec un copolymère, tel que revendiqué à la revendication 8, chargé dans ou en revêtement ou greffé sur une cuvette, une cartouche, une tige, une aiguille, une membrane ou une surface plate, pour adsorber toute ochratoxine présente, et on élue les ochratoxines du polymère pour une mesure quantitative de toute ochratoxine présente.
